# EUROPÄISCHE PATENTSCHRIFT

(11) **EP 2 316 317 B1**
(45) Veröffentlichungstag und Bekanntmachung des Hinweises auf die Patenterteilung: **28.11.2012**
(21) Anmeldenummer: 10188501.0
(22) Anmeldetag: 22.10.2010
(51) Int. Cl.: A47J 39/00

(54) **Großküchengerät, insbesondere Tablett-Transportwagen**
Device for commercial kitchen, in particular a food-tray delivery cart
Appareil pour cuisine professionnelle, notamment un chariot de transport de tablettes

(30) Priorität: 29.10.2009 DE 102009051162
(43) Veröffentlichungstag der Anmeldung: 04.05.2011
(73) Patentinhaber: HUPFER Metallwerke GmbH & Co. KG, 48653 Coesfeld (DE)
(72) Erfinder:
(74) Vertreter: Lorenz, Bernd Ingo Thaddeus

(56) Entgegenhaltungen:
- US-A- 5 449 232
- US-A1- 2004 074 399
- US-B1- 6 684 657

## Beschreibung

Die Erfindung betrifft ein Großküchengerät, insbesondere einen Tablett-Transportwagen, mit
einem Innenraum, der durch mindestens eine Trennwand in thermisch getrennte Räume unterteilt ist, und
mindestens einem Speisentablett, welches eine erste Stellfläche zur Bestückung mit Geschirrkomponenten für warme Speisen, eine zweite Stellfläche zur Bestückung mit Geschirrkomponenten für kühl zu lagernde Speisen sowie einen Verbindungsabschnitt zwischen den beiden Flächen aufweist,
wobei der Verbindungsabschnitt des Speisentabletts in Aufnahmeschlitze der Trennwand einschiebbar ist und eine von einer Nutbodenfläche und zwei Nutwandflächen gebildete Führungsnut aufweist und wobei die Aufnahmeschlitze einen profilierten Rand aufweisen, der in die Führungsnut eines in den Aufnahmeschlitz eingeschobenen Speisentabletts eingreift und das Speisentablett quer zur Einschubrichtung gegen Verrutschen sichert.

Ein Tablett-Transportwagen mit den vorstehend beschriebenen Merkmalen ist aus US 2004/0074399 A1 bekannt. Der obere Rand der in der Trennwand vorgesehenen Aufnahmeschlitze ist rinnenförmig ausgebildet. Der untere Rand weist ein vorspringendes Profil auf, welches nach Art einer Nut-/Federanordnung in das Rinnenprofil des oberen Randes eingreift. Die Aufnahmeschlitze lassen sich nur schlecht reinigen. Aufgrund der Querschnittsgeometrie der Aufnahmeschlitze ist auch das Einschieben der Speisentabletts schwierig.

Aus DE 199 05 563 A1 ist ebenfalls ein Tablett-Transportwagen mit den eingangs beschriebenen Merkmalen bekannt. Der obere Rand der in der Trennwand vorgesehenen Aufnahmeschlitze ist als ebene Fläche ausgebildet. Der untere Rand der Aufnahmeschlitze ist profiliert und weist ein Querschnittsprofil auf, welches sich zum Schlitz trapezförmig verjüngt. Die Speisentabletts weisen an ihrer Unterseite eine Führungsnut zum Einschieben in die Aufnahmeschlitze auf. Die Führungsnut ist bei der Handhabung der Tabletts von oben nicht sichtbar, was das Einschieben der Speisentabletts in die Aufnahmeschlitze erschwert. Auch die Reinigungsmöglichkeit der Aufnahmeschlitze ist noch verbesserungsbedürftig, denn zwischen den oberen und unteren Rändern der Aufnahmeschlitze bilden sich enge Zwickel, die sich nur schwer vollständig säubern lassen.

Bei einem aus US 5 449 232 A bekannten Tablett-Transportwagen mit den eingangs beschriebenen Merkmalen weist die Trennwand an den unteren Rändern der Aufnahmeschlitze jeweils ein sich zum Schlitz trapezförmig verjüngendes Querschnittsprofil auf. Der obere Rand der in der Trennwand vorgesehenen Aufnahmeschlitze ist als ebene Fläche ausgebildet und mit einer beweglichen Dichtung ausgestattet, die in einer die ebene Fläche durchsetzenden Nut angeordnet ist. An der Unterseite weist das Speisentablett eine Führungsnut zum Einschieben in die Aufnahmeschlitze auf. Auch bei diesem Tablett-Transportwagen ist die Führungsnut bei der Handhabung des Tabletts von oben nicht sichtbar.

Gegenstand der Erfindung ist ein Großküchengerät nach Anspruch 1.

Erfindungsgemäß ist die Führungsnut an der Oberseite des Speisentabletts angeordnet und ist an der Unterseite des Speisentabletts eine im Vergleich zur Nutbodenfläche breitere Auflagefläche zur Abstützung auf dem unteren Rand der Aufnahmeschlitze vorgesehen. Die Trennwand weist an den oberen und unteren Rändern der Aufnahmeschlitze jeweils ein sich zum Schlitz trapezförmig verjüngendes Querschnittsprofil auf, wobei der obere Rand der Aufnahmeschlitze in die Führungsnut des in einen Aufnahmeschlitz eingeschobenen Speisentabletts formschlüssig eingreift.

Bei der Handhabung des Speisentabletts ist die Führungsnut an der Oberseite des Speisentabletts sichtbar und kann beim Einschieben des Speisentabletts in die Aufnahmeschlitze der Trennwand als Orientierungshilfe herangezogen werden. Dies erleichtert das Einschieben des Speisentabletts. Dabei ist auch von Bedeutung, dass beim Einschieben des Speisentabletts nur auf die korrekte Zuordnung der Führungsnut und des oberen Randes der Aufnahmeschlitze geachtet werden muss und dass an der Unterseite des Speisentabletts eine im Vergleich zur Nutbodenfläche breitere ebene Auflagefläche vorgesehen ist, so dass beim Einschieben des Speisentabletts unterseitig keinerlei Zwänge auftreten können. Die Aufnahmeschlitze lassen sich aufgrund der erfindungsgemäßen Formgebung ihrer Ränder leicht reinigen. Die sich trapezförmig verjüngenden Querschnittsprofile an den oberen und unteren Rändern der Aufnahmeschlitze begrenzen gut zugängliche Flächen, die sich mit einem Lappen leicht und vollständig reinigen lassen.

Die Führungsnut des Speisentabletts erstreckt sich über die gesamte Breite des Speisentabletts und weist vorzugsweise einen trapezförmigen Nutquerschnitt auf. Die Führungsnut ist zweckmäßig in einen erhöhten Tablettrand des Speisentabletts eingeformt, welcher die erste Stellfläche für warme Speisen und die zweite Stellfläche für kühl zu lagernde Speisen einfasst.

Die Stellflächen des Speisentabletts sind erfindungsgemäß als wannenförmige Vertiefungen ausgebildet und der Verbindungsabschnitt zwischen den wannenförmigen Vertiefungen ist erfindungsgemäß als Steg mit einer unterseitig ebenen Auflagefläche ausgebildet.

Die Trennwand besteht zweckmäßig aus einer Platte, welche zu einer Längsseite der Platte offene Aufnahmeschlitze enthält und an der gegenüberliegenden Längsseite einen durchgehenden Steg bildet. Die so gestaltete Trennwand kann als tragendes Element genutzt werden, welches im Verbund mit einer angrenzenden Frontwand oder Rückwand des Großküchengeräts das Gewicht eines Stapels aus mehreren mit Geschirrkomponenten bestückten Speisentabletts aufnehmen kann. Die Trennwand kann insbesondere aus Kunststoff oder einem mehrlagigen Sandwichmaterial bestehen.

Im Folgenden wird die Erfindung anhand einer lediglich ein Ausführungsbeispiel darstellenden Zeichnung erläutert. Es zeigen schematisch:
- **Fig. 1**: einen Tablett-Transportwagen,
- **Fig. 2**: einen Ausschnitt aus den in Fig. 1 dargestellten Tablett-Transportwagen,
- **Fig. 3a**: eine Draufsicht auf ein Speisentablett zur Verwendung gemäß Fig. 2,
- **Fig. 3b**: einen Längsschnitt durch das in Fig. 3a dargestellte Speisentablett.

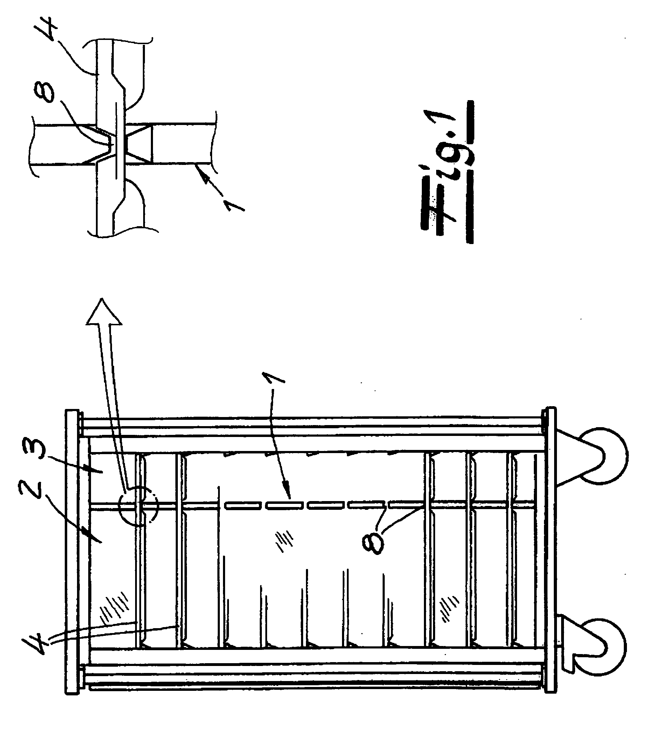

Der in Fig. 1 dargestellte Tablett-Transportwagen weist einen Innenraum auf, der durch mindestens eine Trennwand 1 in thermisch getrennte Räume 2, 3 unterteilt ist, und ist mit mindestens einem Speisentablett 4 bestückt, welches eine erste Stellfläche 5 für Geschirrkomponenten mit warmen Speisen, eine zweite Stellfläche 6 für Geschirrkomponenten mit kühl zu lagernden Speisen sowie einen Verbindungsabschnitt 7 zwischen den beiden Flächen 5, 6 aufweist.

Der Verbindungsabschnitt 7 des Speisentabletts ist in Aufnahmeschlitze 8 der Trennwand 1 einschiebbar und weist eine von einer Nutbodenfläche 9 und zwei Nutwandflächen gebildete Führungsnut 10 auf. Die Aufnahmeschlitze 8 der Trennwand sind mit einem profilierten Rand versehen, der in die Führungsnut 10 eines in den Aufnahmeschlitz 8 eingeschobenen Speisentabletts 4 eingreift und das Speisentablett quer zur Einschubrichtung gegen Verrutschen sichert.

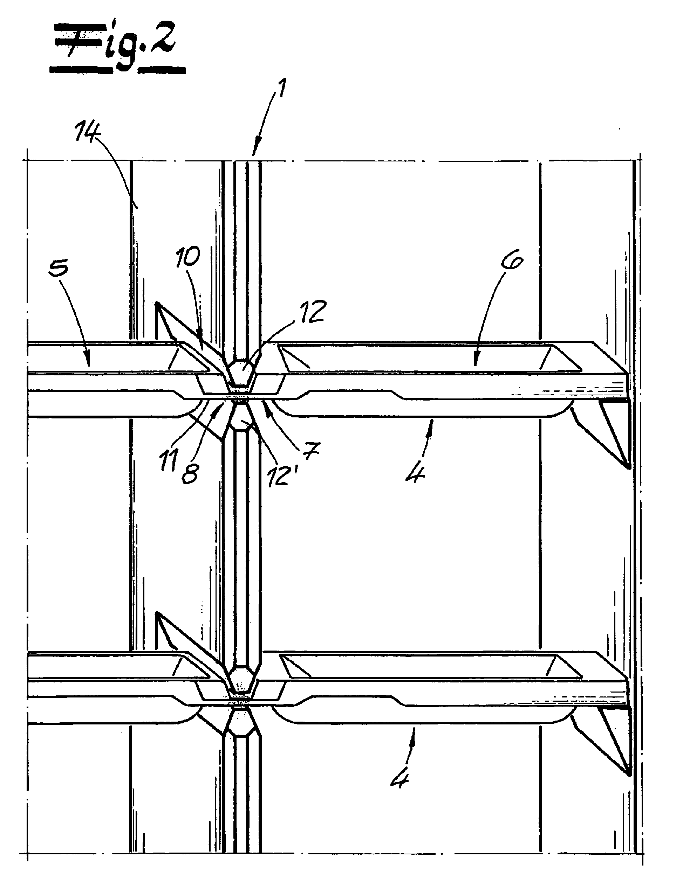

Der Fig. 2 ist zu entnehmen, dass die Führungsnut 10 an der Oberseite des Speisentabletts 4 angeordnet ist und dass an der Unterseite des Speisentabletts 4 eine im Vergleich zur Nutbodenfläche 9 breitere ebene Auflagefläche 11 zur Abstützung auf dem unteren Rand der Aufnahmeschlitze vorgesehen ist. Die Trennwand 1 weist an den oberen und unteren Rändern 1 der Aufnahmeschlitze jeweils ein sich zum Schlitz trapezförmig verjüngendes Querschnittsprofil 12, 12' auf. Aus der Darstellung in Fig. 2 geht ferner hervor, dass der obere Rand der Aufnahmeschlitze 8 in die Führungsnut 10 des in einen Aufnahmeschlitz eingeschobenen Speisentabletts 4 formschlüssig eingreift.

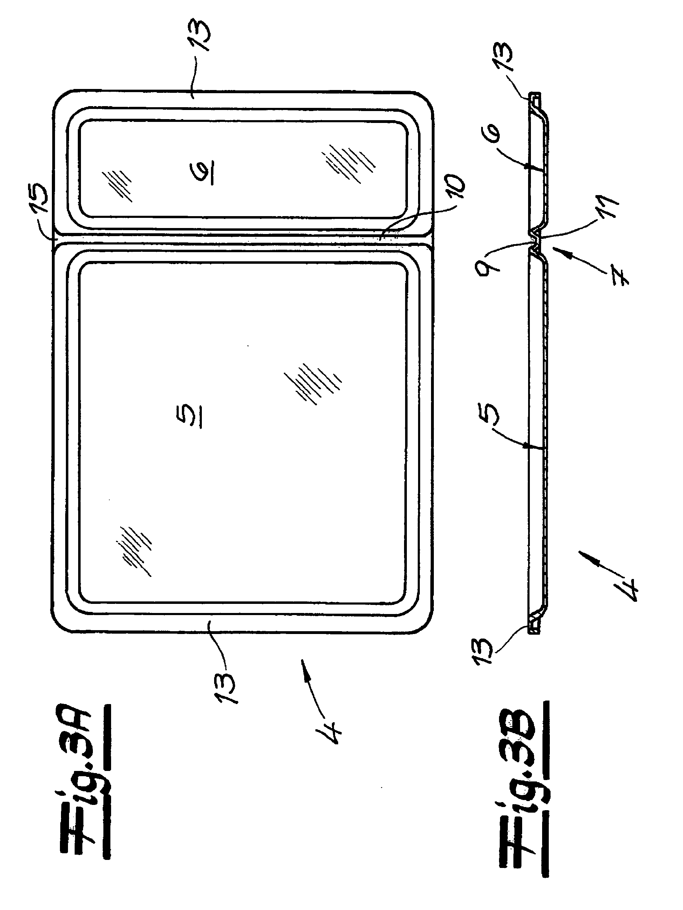

Gemäß den Darstellungen in den Fig. 3a und 3b erstreckt sich die Führungsnut 10 des Speisentabletts über die gesamte Breite des Speisentabletts 4 und weist einen trapezförmigen Nutquerschnitt auf. Durch den trapezförmigen Nutquerschnitt zentriert sich das Speisentablett 4 beim Einschieben in die Aufnahmeschlitze 8 der Trennwand 1. An den Enden weist die Führungsnut 10 Erweiterungen 5 auf, die das Einschieben des Speisentabletts 4 in die Aufnahmeschlitze 8 der Trennwand 1 erleichtern. Die Erweiterungen 15 können durch bogenförmige Flächen oder Abschrägungen begrenzt sein. Das Speisentablett 4 ist mit einem erhöhten Tablettrand 13 versehen, welcher die erste Stellfläche 5 für warme Speisen und die zweite Stellfläche 6 für kühl zu lagernde Speisen einfasst. Die Führungsnut 10 ist in den erhöhten Tablettrand 13 eingeformt. Die Stellflächen 5, 6 des Speisentabletts 4 sind als wannenförmige Vertiefungen ausgebildet. Die Fig. 3b veranschaulicht, dass der Verbindungsabschnitt 7 zwischen den wannenförmigen Vertiefungen als Steg mit einer unterseitig ebenen Auflagefläche 11 ausgebildet ist.

In Fig. 2 wurde angedeutet, dass die Trennwand 1 aus einer Platte besteht, welche an einer Längsseite offene Aufnahmeschlitze 8 enthält und an der gegenüberliegenden Längsseite einen durchgehenden Steg 14 bildet. Die Trennwand 1 kann im Zusammenwirken mit der Rückwand des Tablett-Transportwagens als tragendes Element genutzt werden, welches das Gewicht eines Stapels aus mehreren Speisentabletts 4 und darauf angeordneten Geschirrkomponenten aufnehmen kann.

Die Speisentabletts 4 lassen sich in die Aufnahmeschlitze 8 der Trennwand 1 leicht einschieben, da die Führungsnut 10 an der Oberseite der Speisentabletts 4 sichtbar ist und als Orientierungshilfe genutzt werden kann. Zu der einfachen Handhabung trägt auch bei, dass der Verbindungsabschnitt 7 des Speisentabletts 4 unterseitig als breite ebene Auflagefläche 11 ausgebildet ist. Durch die sich trapezförmig verjüngenden Querschnittsprofile 12, 12' der unteren und oberen Rändern der Aufnahmeschlitze 8 lassen sich alle Flächen der Trennwand 1 bis in den Schlitzbereich des Aufnahmeschlitzes gut reinigen.

## Patentansprüche

1. Großküchengerät, insbesondere Tablett-Transportwagen, mit
einem Innenraum, der durch mindestens eine Trennwand (1) in thermisch getrennte Räume (2, 3) unterteilt ist, und
mindestens einem Speisentablett (4), welches eine erste Stellfläche (5) zur Bestückung mit Geschirrkomponenten für warme Speisen, eine zweite Stellfläche (6) zur Bestückung mit Geschirrkomponenten für kühl zu lagernde Speisen sowie einen Verbindungsabschnitt (7) zwischen den beiden Flächen (5, 6) aufweist,
wobei der Verbindungsabschnitt (7) des Speisentabletts (4) in Aufnahmeschlitze (8) der Trennwand (1) einschiebbar ist und eine von einer Nutbodenfläche (9) und zwei Nutwandflächen gebildete Führungsnut (10) aufweist und wobei die Aufnahmeschlitze (8) einen profilierten Rand aufweisen, der in die Führungsnut (10) eines in den Aufnahmeschlitz eingeschobenen Speisentabletts (4) eingreift und das Speisentablett (4) quer zur Einschubrichtung gegen Verrutschen sichert, wobei die Trennwand (1) an den unteren Rändern der Aufnahmeschlitze (8) jeweils ein sich zum Schlitz trapezförmig verjüngendes Querschnittsprofil (12') aufweist, **dadurch gekennzeichnet, dass** die Führungsnut (10) an der Oberseite des Speisentabletts (4) angeordnet ist, dass an der Unterseite des Speisentabletts (4) eine im Vergleich zur Nutbodenfläche (9) breitere Auflagefläche zur Abstützung auf dem unteren Rand der Aufnahmeschlitze (8) vorgesehen ist und dass die Trennwand (1) auch an den oberen Rändern der Aufnahmeschlitze (8) jeweils ein sich zum Schlitz trapezförmig verjüngendes Querschnittsprofil (12) aufweist, wobei der obere Rand der Aufnahmeschlitze (8) in die Führungsnut (10) des in einen Aufnahmeschlitz eingeschobenen Speisentabletts (4) formschlüssig eingreift, und dass die Stellflächen (5, 6) des Speisentabletts (4) als wannenförmige Vertiefungen ausgebildet sind und der Verbindungsabschnitt (7) zwischen den wannenförmigen Vertiefungen als Steg mit einer unterseitig ebenen Auflagefläche (11) ausgebildet ist.

2. Großküchengerät nach Anspruch 1, **dadurch gekennzeichnet, dass** die Führungsnut (10) sich über die gesamte Breite des Speisentabletts (4) erstreckt und einen trapezförmigen Nutquerschnitt aufweist.

3. Großküchengerät nach Anspruch 1 oder 2, **dadurch gekennzeichnet, dass** das Speisentablett (4) einen erhöhten Tablettrand (13) aufweist, welcher die erste Stellfläche (5) für warme Speisen und die zweite Stellfläche (6) für kühl zu lagernde Speisen einfasst, und dass die Führungsnut (10) in den erhöhten Tablettrand (13) eingeformt ist.

4. Großküchengerät nach einem der Ansprüche 1 bis 3, **dadurch gekennzeichnet, dass** die Trennwand (1) aus einer Platte besteht, welche zu einer Längsseite der Platte offene Aufnahmeschlitze (8) enthält und an der gegenüberliegenden Längsseite einen durchgehenden Steg (14) bildet.

## Claims

1. An industrial kitchen device, in particular a tray transport trolley comprising
an inner space, which is divided into thermally separated spaces (2, 3) by means of at least one partition wall (1), and
at least one food tray (4), which encompasses a first storage space (5) for placing tableware components for hot food, a second storage space (6) for placing tableware components for food, which is to be kept refrigerated, as well as a connecting section (7) between the two surfaces (5, 6),
wherein the connecting section (7) of the food tray (4) can be inserted into accommodation slits (8) of the partition wall (1) and encompasses a guide groove (10), which is formed by a groove bottom area (9) and two groove wall areas, and wherein the accommodation slits (8) encompass a profiled edge, which engages with the guide groove (10) of a food tray (4), which is inserted into the accommodation slit and which secures the food tray (4) from shifting at right angles to the insertion direction, wherein the partition wall (1) in each case encompasses a cross sectional profile (12'), which tapers towards the slit in a trapezoidal manner, **characterized in that** he guide groove (10) is arranged on the upper side of the food tray (4), that provision is made on the bottom side of the food tray (4) for a support surface, which is wider in comparison with the groove bottom area (9), for being supported on the lower edge of the accommodation slits (8), and that the partition wall (1) in each case also encompasses a cross sectional profile (12), which tapers towards the slit in a trapezoidal manner, on the upper edges of the accommodation slits (8), wherein the upper edge of the accommodation slits (8) engages with the guide groove (10) of the food tray (4), which is inserted into an accommodation slit, in a positive locking manner, and **in that** the storage spaces (5, 6) of the food tray (4) are embodied as trough-shaped depressions, and the connecting section (7) between the trough-shaped depressions is embodied as a bar comprising a support surface (11) having a flat bottom side.

2. The industrial kitchen device according to claim 1, **characterized in that** the guide groove (10) extends across the entire width of the food tray (4) and encompasses a trapezoidal groove cross section.

3. The industrial kitchen device according to claim 1 or 2, **characterized in that** the food tray (4) encompasses an elevated tray edge (13), which surrounds the first storage surface (5) for hot food and the second storage surface (6) for food, which is to be kept refrigerated, and **in that** the guide groove (10) is molded into the elevated tray edge (13).

4. The industrial kitchen device according to one of claims 1 to 3, **characterized in that** the partition wall (1) consists of a plate, which comprises accommodation slits (8), which are open towards a longitudinal side of the plate and which forms a continuous bar (14) on the opposite longitudinal side.

## Revendications

1. Appareil pour cuisine professionnelle, notamment chariot de transport de plateaux, avec
un espace intérieur, qui est divisé par au moins une cloison de séparation (1) en des espaces (2, 3) thermiquement séparés et
au moins un plateau-repas (4), lequel comporte une première surface de pose (5) destinée à être garnie de composants de vaisselle pour des plats chauds, une deuxième surface de pose (6) destinée à être garnie de composants de vaisselle pour des aliments à garder au frais, ainsi qu'une partie de liaison (7) entre les deux surfaces (5, 6),
la partie de liaison (7) du plateau-repas (4) étant insérable dans des encoches de logement (8) de la cloison de séparation (1) et comportant une rainure de guidage (10) formée d'une surface de fond de rainure (9) et de deux surfaces de parois de rainure et les encoches de logement (8) présentant un bord profilé qui s'engage dans la rainure de guidage (10) d'un plateau-repas (4) introduit dans l'encoche de logement et qui bloque le plateau-repas (4) contre un glissement à la transversale du sens d'introduction, la cloison de séparation (1) présentant sur les bords inférieurs des encoches de logement (8) chaque fois un profil (12') de section transversale se rétrécissant sous forme trapézoïdale vers l'encoche, **caractérisé en ce que** la rainure de guidage (10) est disposée sur la face supérieure du plateau-repas (4), **en ce que** sur la face inférieure du plateau-repas (4), il est prévu une surface d'appui plus large, en comparaison de la surface de fond de rainure (9), à appuyer sur le bord inférieur des encoches de logement (8) et **en ce que** la cloison de séparation (1) présente également sur les bords supérieurs des encoches de logement (8) chaque fois un profil (12) de section transversale se rétrécissant sous forme trapézoïdale vers l'encoche, le bord supérieur des encoches de logement (8) s'engageant par complémentarité de forme dans la rainure de guidage (10) du plateau-repas (4) introduit dans l'encoche de logement et **en ce que** les surfaces de pose (5, 6) du plateau-repas (4) sont conçues en tant que creux en forme d'auges et la partie de liaison (7) entre les creux en forme d'auges est conçue en tant qu'entretoise avec une surface de support (11) à face inférieure plane.

2. Appareil pour cuisine professionnelle selon la revendication 1, **caractérisé en ce que** la rainure de guidage (10) s'étend sur toute la largeur du plateau-repas (4) et présente une section transversale de rainure de forme trapézoïdale.

3. Appareil pour cuisine professionnelle selon la revendication 1 ou la revendication 2, **caractérisé en ce que** le plateau-repas (4) comporte un bord de plateau (13) relevé qui borde la première surface de pose (5) destinée à des aliments chauds et la deuxième surface de pose (6) destinée à des aliments à garder au frais et **en ce que** la rainure de guidage (10) est moulée dans le bord de plateau (13) relevé.

4. Appareil pour cuisine professionnelle selon l'une quelconque des revendications 1 à 3, **caractérisé en ce que** la cloison de séparation (1) est constituée d'un panneau, lequel comprend des encoches de logement (8) ouvertes sur un côté longitudinal du panneau et forme sur le côté longitudinal opposé une entretoise (14) continue.
